# EUROPÄISCHE PATENTSCHRIFT

(11) **EP 0 683 363 B1**
(45) Veröffentlichungstag und Bekanntmachung des Hinweises auf die Patenterteilung: **26.01.2000**
(21) Anmeldenummer: 95107213.1
(22) Anmeldetag: 12.05.1995
(51) Int. Cl.: F24J 2/04, F24J 2/40

(54) **Verfahren zur Veränderung der Funktion einer Gebäudehülle oder eines oder mehrerer Bauelemente der Gebäudehülle**
Process for modifying the function of a curtain wall or of one or several of its components
Procédé pour changer la fonction d'un mur rideau ou d'un ou plusieurs de ses composants

(30) Priorität: 17.05.1994 DE 4417183; 24.04.1995 DE 19514952
(43) Veröffentlichungstag der Anmeldung: 22.11.1995
(73) Patentinhaber: Rud. Otto Meyer-Umwelt-Stiftung, 22047 Hamburg (DE)
(72) Erfinder: Heyden, Burkhard, D-22587 Hamburg (DE)
(74) Vertreter: Richter, Werdermann & Gerbaulet

(56) Entgegenhaltungen:
- EP-A- 0 028 587
- DE-A- 2 930 157
- DE-A- 3 004 364
- DE-A- 4 219 728
- DE-U- 9 208 688
- FR-A- 2 352 261
- US-A- 4 515 150

## Beschreibung

Die Erfindung betrifft ein Verfahren zur Veränderung der Funktion von Gebäudehüllen im Hinblick auf Licht-, Luft- und/oder Wärmeübergang und -durchgang, insbesondere zur Veränderung dieser technischen Funktion in neukonstruierten Außenwänden und/oder Dächern oder Teilen von diesen als physikalische Grenzflächen zwischen dem Gebäudeinnenraum und der Gebäudeumgebung, wobei die Gebäudehüllen mit oder ohne transparente, wärmedämmende äußere Wetterschutzschicht nach Bedarf und Angebot geregelt Licht absorbieren und in Wärme umwandeln und welche die Wärme über Trägermedien in der Gebäudehülle bewegen und speichern und/oder aus der Gebäudehülle herausbewegen lassen, um sie nach Bedarf an anderer Stelle oder zu anderem Zeitpunkt zur Verwendung bereitzustellen, und/oder wobei die Gebäudehüllen Licht und/oder Luft in das Innere durchlassen können, damit in den Innenräumen die klimatischen und optischen Verhältnisse dem Nutzungsbedarf entsprechend eingestellt werden können, wobei mindestens ein Hohlraum ein wesentliches Volumen zwischen den inneren und äußeren Begrenzungsmaterialien der Gebäudehülle zur Aufnahme einer Wärmespeichermasse bildet.

Es ist bekannt, daß die Hülle eines Gebäudes, die aus Stein, Glas, Kunststoff, Holz oder anderen geeigneten Materialien aufgebaut sein kann, als physikalische Grenzfläche zwischen dem Innenraum und der Außenumgebung des Gebäudes dient. Dabei bestimmen die Eigenschaften der Gebäudehülle Qualität und Quantität des Durchgangs an Licht, Gas und Wärme durch die Gebäudehülle.

Es ist auch bekannt, transparente Wärmedämmschichten, die für gerichtete und diffuse Sonnenstrahlung durchlässig sind, auf einer dunkel gestrichenen Wandoberfläche der Außenwand eines Gebäudes anzuordnen. Bedingt durch den Wärmewiderstand des Dämmaterials fließt ein Großteil der gewonnenen Wärme durch das Mauerwerk nach innen und wird zeitverzögert in den angrenzenden Raum abgegeben. Diese Wärme kann zur Heizung der angrenzenden Räume in der Fassade ungeregelt gespeichert werden. Durch ihre Durchlässigkeit für Solarstrahlung wirken mit einer transparenten Wärmedämmung versehene Gebäudefassaden wie ein riesiger Absorber. Zur Innenraumregulierung dienen z. B. klimaabhängig, elektronisch gesteuerte Rollos in den Fassaden. Diese ermöglichen im Sommer einen Überhitzungsschutz und vermeiden im Winter Wärmeverluste (DE 32 30 639 A1).

Es ist auch bereits ein Verfahren zur gleichmäßigen Klimatisierung von Räumen eines Gebäudes, insbesondere in den Übergangszeiten, vorgeschlagen worden, nach dem vorgesehen ist, daß auf mindestens einer sonnenzugewandten Seite des Gebäudes Sonnenwärme aufgenommen wird, daß die Wärme zu den sonnenabgewandten Teilen des Gebäudes transportiert und in den dort gelegenen Räumen an diese abgegeben wird, wobei vorgesehen ist, daß die Wärme zwischengespeichert wird. Bei der hierzu vorgesehenen Vorrichtung ist auf der sonnenzugewandten Seite des Gebäudes eine Sonnenwärme aufnehmende Einrichtung angeordnet, die über dünne Leitungen mit in den sonnenabgewandten Teilen des Gebäudes angeordneten, Wärme abgebenden Einrichtungen verbunden ist, wobei in den Leitungen zumindest eine Umwälzpumpe und mindestens ein Wärmespeicher vorgesehen ist (DE 35 08 876 A1).

Mit der EP 0 455 184 A1 ist bereits ein Solarheizmodul zur Umwandlung von Solarstrahlung in Wärmeenergie und zur Verwendung zum Heizen und/oder Kühlen eines Gebäudes vorgeschlagen worden, der als Fassadenelement einsetzbar ist. Bei diesem bekannten Solarheizmodul ist vorgesehen, daß an der der Sonneneinstrahlung abgewandten Seite eines wettergeschützen transparenten Wärmeelementes ein Absorber angeordnet ist, der mit einem absorberseitigen Wärmeübertrager verbunden ist, der mit einem raumseitigen Wärmeübertrager und einem Speicher über mindestens eine innere Vorlaufleitung und eine innere Rücklaufleitung bzw. innere Kanäle derart verbunden ist, daß das Wärmeträgermedium passiv durch Schwerkraft im Kreislauf vom absorberseitigen Wärmeübertrager zum raumseitigen Wärmeübertrager, vom Absorber zum Speicher oder vom Speicher zum raumseitigen Wärmeübertrager bzw. umgekehrt führbar ist. Hierbei ist vorgesehen, daß die Speicher und/oder raumseitigen Wärmeüberträger und ggf. die Absorber einer Gruppe von Solarheizmodulen mit mindestens einem hochliegenden gasgefüllten und als Austauschspeicher ausgebildeten Geschoß-Speicher verbunden sind, wobei in mindestens einer der der mit der äußeren Vorlaufleitung und äußeren Rücklaufleitung verbundenen Anschlußleitungen des Geschoß-Speichers eine Absperrarmatur, wie Ventil, Schieber oder Klappe, angeordnet ist. Dabei ist vorgesehen, Gas oder eine Flüssigkeit als Speichermasse zu verwenden.

Allen diesen bekannten Vorschlägen ist gemeinsam, daß die einmal durch die Anordnung der entsprechenden Elemente und die Ausbildung der Gebäudehülle vorgegebenen Eigenschaften der Gebäudehülle festliegen und die sich ergebenden Durchlaß- bzw. Übertragungsverhältnisse in geschlossenen Flächen im wesentlichen festliegen und nur durch mechanisch oder elektromechanisch bewegte Verschlüsse von Öffnungen wie Jalousien, Läden, Klappen, Fenster, Lüfter verändert werden können.

Es ist daher Aufgabe der Erfindung, ein neues Verfahren der eingangs genannten Art anzugeben, mit dem es möglich ist, die Funktionseigenschaften einer Gebäudehülle bzw. von deren Bauelementen so zu verändern, daß eine Anpaßbarkeit an gegebene Versorgungsbedarfe in Bezug auf Wärmeenergie, Licht, Frischluft u. dgl. durchführbar ist. Dabei soll es gleichzeitig möglich werden, vorhandene Ressourcen optimal auszunutzen. Außerdem soll eine entsprechende Anlage und ein hierzu geeignetes Bauelement eine Gebäudehülle angegeben werden, welche gegenstand von Ansprüchen 3 and 6 sind.

Das erfindungsgemäße Verfahren ist durch die in Anspruch 1 angegebenen Merkmale gekennzeichnet.

Die Kernüberlegung des erfindungsgemäßen Verfahrens besteht dabei darin, daß in der geschlossenen Gebäudehülle ein Hohlraum ausgebildet wird, der bevorzugterweise mit flüssigen und gasförmigen Medien füllbar ist und der zusätzlich noch teilweise eine feste Füllung mit einem Dämmaterial enthalten kann, wobei das Dämmaterial offenporig ausgebildet ist, um von dem oder den eingefüllten Medien durchströmt werden zu können, um auch die Eigenschaften des Dämmaterials in bestimmten Umfang zu beeinflussen. Durch die Einfüllbarkeit von Gas, also beispielsweise Luft und einem flüssigen Medium, also beispielweise Wasser oder einem anderen geeigneten Wärmeträger ist der Wärmedurchgang durch die Gebäudehülle in hohem Maße beeinflußbar, wobei die Gebäudehülle gleichzeitig auch als Wärmespeicher und - bei transparenter Ausbildung - als Lichtfilter nutzbar ist. Dabei ist es möglich, die gewünschten Eigenschaftsänderungen nicht nur durch eine Manipulation derart, daß beispielsweise Gas gegen Wasser ausgetauscht wird oder umgekehrt, durchzuführen, sondern es ist auch möglich, die gewünschten Änderungen durch Füllstandsgradänderungen bei Verwendung entsprechender verschieden hoher vertikaler Trennwände und/oder durch vertikale Schichtung unterschiedlicher Medien bei Verwendung druckabhängiger Ventile zu den vertikalen Kammern durchzuführen.

Dabei wird nicht nur der K-Wert der Gebäudehülle bzw. des jeweiligen Bauelementes geändert, sondern es ändert sich unter Umständen auch die Grundfunktion, die darin bestehen kann, daß die Gebäudehülle als rein geometrische Begrenzung wirkt oder daß sie als Wärmedämmung wirkt oder daß sie als Wärmespeicher wirkt. Bevorzugterweise wird das Verfahren dazu genutzt, entsprechende Betriebszustände der Gebäudehülle einzustellen, wodurch die Nutzung vorhandener Ressourcen optimierbar ist. Es ist dabei vorgesehen, daß die Betriebszustände der Gebäudehülle, wie Passivbetrieb ohne Medientransport, Schwerkraftbetrieb für den Nahbereich, Aktivtransport der Medien mit Hilfsenergie sowie Frost- und Überhitzungsschutz, auch Verschattung und Lüftung, in Gebäudehöhenabschnitten und in Gebäudezonen bezüglich Orientierung und Nutzungsansprüchen mittels Austausch, Niveaustufen und/oder Druckunterschieden von flüssigen und gasförmigen Medien verschiedener physikalischer Eigenschaften, insbesondere von Wasser und Luft, in Bauelementen der Gebäudehülle so hydropneumatisch ferngesteuert werden, daß sich verschiedene Lichtdurchlässigkeiten, Wärmedurchlässigkeiten, Energieabsorptionsfähigkeiten, Wärmespeicherfähigkeiten, Wärmetransporteigenschaften, Luftdurchlässigkeiten, Feuchteeinflüsse usw. einstellen und dadurch Versorgungsbedarfe gedeckt werden.

Hierdurch können alle Versorgungsbedarfe und alle Angebote optimal berücksichtigt und ausgenutzt werden, wobei die Nutzung des Verfahrens auch auf Gebäudeteile beschränkt sein kann, um bestimmte Bedarfe oder Angebote optimal zu nutzen.

Wenn vorgesehen wird, daß einzelne oder alle Bauelemente der Gebäudehülle, die ja im Inneren einen Hohlraum aufweisen, der bei der Bildung der Gebäudehülle aus den Bauelementen zu einem großen gemeinsamen Hohlraum verbunden sein kann oder der in einzelne, einzeln ansteuerbare Hohlräume aufgeteilt ist, in dem Hohlraum Wärmedämmaterial enthalten, das entsprechend manipulierbar ausgebildet ist, kann durch Einbringung eines flüssigen und/oder eine gasförmigen Mediums die Wirkung des Dämmaterials sehr stark beeinflußt werden.

Eine Anlage zur Veränderung der Funktion einer Gebäudehülle oder eines oder mehrerer Bauelemente der Gebäudehülle, insbesondere zur Durchführung des erfindungsgemäßen Verfahrens ist so ausgebildet, daß Bauelemente der Gebäudehülle mit veränderbaren Eigenschaften, bei denen insbesondere durch Austausch von Gas und Flüssigkeit Wärmedämmelemente in Wärmespeicherelemente umwandelbar sind.

Mit einer solchen Anlage ist es möglich, die Bauelemente der Gebäudehülle einzeln oder in Gruppen so anzusteuern, daß eine optimale Versorgung der Bedarfe und Nutzung der Angebote auch in Gebäudehöhenabschnitten und in Gebäudezonen separat durchführbar ist.

Gemäß einer bevorzugten Ausführungsform ist vorgesehen, daß mindestens ein Speicher gefärbte Flüssigkeit enthält, die zur Schattierung und/oder Wärmegewinnung in transparente Wärmedämmelemente gepumpt wird. Hierdurch ist es möglich, einerseits den Lichteinfall durch die Gebäudehülle direkt und auch die Wärmestrahlung innerhalb der Gebäudehülle zu beeinflussen.

Bei einem aus der DE 29 30 157 C 2 bekannten Bauelement einer Gebäudehülle mit veränderbaren Eigenschaften zur Veränderung der Funktion der Gebäudehülle im Hinblick auf Licht-, Luft- und/oder Wärmeübergang und -durchgang zu entnehmen ist, ist vorgesehen, daß es Solarstrahlung und Umweltwärme aufnimmt oder Wärme an die Außenluft abgibt und Wärme über eine Wärmeträgermedium passiv durch Schwerkeraft oder aktiv durch die Verbindung mit der Zirkulation einer Anlage eines Gebäudes transportieren und speichern läßt und damit Heizen und Kühlen des Gebäudes beiträgt. Als Bauelement zur Bildung eines Hohlraums in der Gebäudehülle ist einzeln oder in Gruppen flächenbildend mindestens ein Behälter angeordnet, der einen Teil oder die Gänze des Querschnitts der Hülle, einnimmt.

Um die Manipulation der in einem solchen Bauelement eingebrachten bzw. enthaltenen Medien zur Steuerung der Eigenschaften optimal durchführen zu können und um insbesondere auch die Wirkungen der Eigenschaften der unterschiedlichen Medien (fest, flüssig, gasförmig) optimal zu nutzen, ist vorgesehen, daß außen in der Fassade und/oder im Dach einzeln oder in Gruppen flächenbildend mindestens ein Behälter angeordnet ist, der an der Außenseite als Absorber ausgebildet ist, nach innen, durch gleichhohe oder verschiedenhohe Trennwände geschichtet, mehrere Kammern für unterschiedliche Funktionen bildet, die oben und unten miteinander verbunden sind, wovon die äußere als Kollektor dient, mindestens eine Kammer mit einem lamellen-, faser- oder schwammartigen offenporigen Wärmedämmaterial gefüllt ist und eine nach innen liegende Kammer als Wärmeübertrager zur Wand bzw. zum Raum dient, und der unten und oben Anschlußstutzen zur Verbindung mit einer Anlage für hydropneumatische Füllungen, Druckerhöhungen und Zirkulationen aufweist. Hierbei ist es möglich, durch Beeinflussung der Eigenschaften des Wärmedämmaterials und durch Schichtung der Medien die unterschiedlich gewünschten Eigenschaftsprofile des Bauelementes zu verwirklichen.

Je nach gewählter Funktion des Bauelementes wird die Wärme dort gespeichert, um sie einer sofortigen oder späteren Nutzung zuzuführen oder die Wärme abgefangen wird, um sie durch Ableitung über ein durchströmendes flüssiges Medium an einen Gebäudepunkt zu transportieren, wo sie entweder noch sinnvoll genutzt oder problemlos in die Umgebung abgestrahlt werden kann.

Je nach gewählter Funktion des Bauelementes wird die Wärme dort gespeichert, um sie einer sofortigen oder späteren Nutzung zuzuführen oder die Wärme abgefangen wird, um sie durch Ableitung über ein durchströmendes flüssiges Medium an einen Gebäudepunkt zu transportieren, wo sie entweder noch sinnvoll genutzt oder problemlos in die Umgebung abgestrahlt werden kann.

Es ist eine weitere Erfindungsidee und Aufgabe, durch Veränderungen des statischen Druckes in einer erfindungsgemäßen Anlage ferngesteuert im Bauelement bzw. in allen Bauelementen einer Gebäudezone jeweils mittels einer Klappe die Luftschicht im Abstand zwischen der transparenten Außenschicht und dem Behälter oben geschlossen zu halten oder die Luftschicht zur Versorgung der Räume mit vorgewärmter Frischluft nach innen zu öffnen oder zum Schutz gegen Überhitzung des Bauelementes nach außen zu öffnen. Um Betriebssicherheit zu erlangen, soll auch bei nicht steuerbaren Druckabweichungen PX in der Anlage für die Druckstufen P0 ± PX, P1± PX und P2 ± PX eine eindeutige Klappenstellung erreicht werden.

Eine erfindungsgemäße Ausführung ist eine zweiteilige Klappe, die aus einer Hauptklappe und einer Zwischenklappe besteht und die damit um zwei Drehpunkte die Drehrichtungen und die Drehmomente wechselt und drei Betriebsstellungen einnimmt:
- Bei geschlossener Hauptklappe verschließt die Zwischenklappe die Verbindung zwischen dem Innenraum und der Außenluft. Eine Gewichts- oder Federkraft hält die Klappe gegen den geringen statischen Druck P0 ± PX des Behälters bzw. der Anlage geschlossen.
- Zur ersten Öffnung der Hauptklappe bis zum Anschlag ist nur das Drehmoment um den ersten Drehpunkt der durch den mittelgroßen Druck P1 ± PX erzeugten Hebelkraft mal dem längeren Hebelarm größer als das Drehmoment der konstanten Gewichts- oder Federkraft mal dem kürzeren Hebelarm. Ohne größere Druckerhöhung verharrt die Klappe in dieser Stellung.
- Zur zweiten Öffnung der Hauptklappe in die Gegenrichtung unter Mitnahme der Zwischenklappe ist das Drehmoment um den zweiten Drehpunkt bei dem kurzen Hebelarm nur mit der Kraft aus dem höheren statischen Druck P2 ⁺ PX als das Drehmoment der Gewichts- oder Federkraft mal dem längeren Hebelarm.

Je nach Konstruktion des Behälters kann der Anlagendruck über Kolben, Balgen oder Gummiausbeulungen Kräfte auf die Klappenmechanik übertragen. Bei unerwünschtem Überdruck durch ein Erhitzen der Medien, z. B. Verdampfen des Wassers, öffnen alle Klappen ohne zentrale Steuerung nach außen zur Luftkühlung noch bevor der Überdruck die Sicherheitsventile der Anlage öffnet.

Weitere vorteilhafte und zweckmäßige Ausgestaltungen und Weiterbildungen der Erfindung sind in den Unteransprüchen gekennzeichnet.

Ausführungsbeispiele der Erfindung werden nachstehend anhand der Zeichnungen näher erläutert. Es zeigen:
- Fig. 1: in einer rein schematischen senkrechten Schnittdarstellung die Funktion einer erfindungsgemäßen Gebäudehülle,
- Fig. 2: in einer rein schematischen senkrechten Schnittdarstellung einen Teil eines Gebäudes mit der Gebäudehülle,
- Fig. 3: in einer schematischen Darstellung eine geschoßweise Anlagenschaltung für Bauelemente in einer Gebäudehülle,
- Fig. 4: in einer rein schematischen Darstellung ein erfindungsgemäßes Bauelement,
- Fig. 5: eine weitere Ausführungsform eines Bauelements mit schematischer Funktionsdarstellung,
- Fig. 6: in einer senkrechten Schnittdarstellung, einer Längsschnittdarstellung und in einer waagerechten Schnittdarstellung weitere Ausführungsformen eines Bauelements,
- Fig. 7 und 8,: in einer senkrechten Schnittdarstellung weitere Ausführungsformen des Bauelements,
- Fig. 9: in einer senkrechten Schnittdarstellung die Anordnung von zwei Ausführungsformen des Bauelements in einer Dachschräge, und
- Fig. 10 bis 12: in schematischen Darstellungen ein Ventil zur Luftführung.

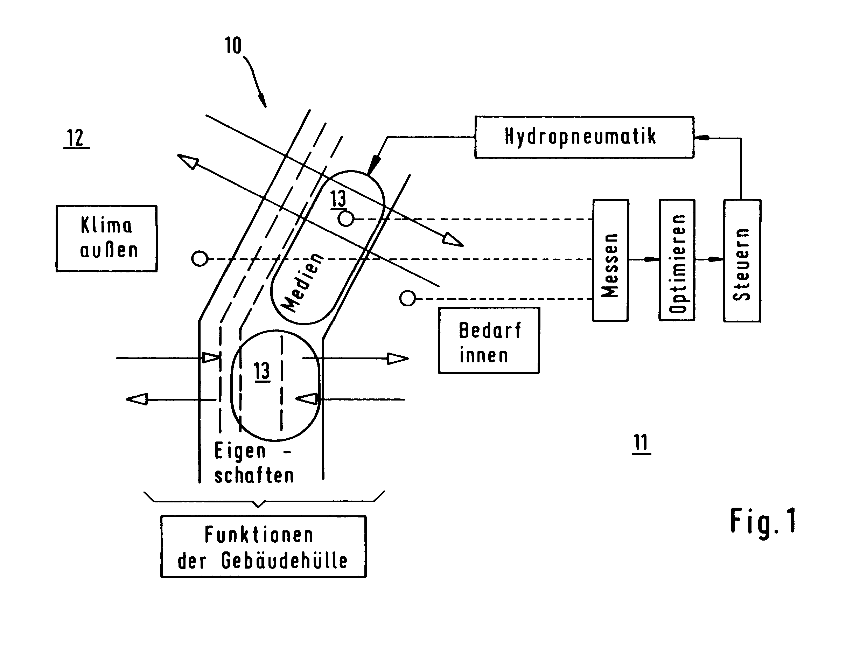

In Fig. 1 ist der Grundgedanke der Erfindung bezüglich der hydropneumatisch veränderlich gestalteten Fassadenelemente bzw. Gebäudehülle schematisch dargestellt. Die Funktion der Gebäudehülle 10 als physikalische Grenze zwischen dem Inneren 11 des Gebäudes und der Umgebung 12 wird deutlich und auch, daß die Gebäudehülle 10 abhängig von ihren diesbezüglichen speziellen Eigenschaften einen Ausgleich zwischen dem Klima außen und den Angeboten und Bedarfen innen schafft bzw. diese beeinflußt. Es ist daher sinnvoll, daß angepaßt an die festgestellten klimatischen Bedingungen außen, wobei in diesem Fall Klima aller relevanten Größen von Licht, Luft und Temperatur umfaßt und an die festgestellten Angebote und Bedarfe innen und an die festgestellten Zustände des oder der Medien in der Gebäudehülle 10 die Steuerung bzw. die Manipulation der die Eigenschaften der Gebäudehülle 10 beeinflussenden Medien durchzuführen.

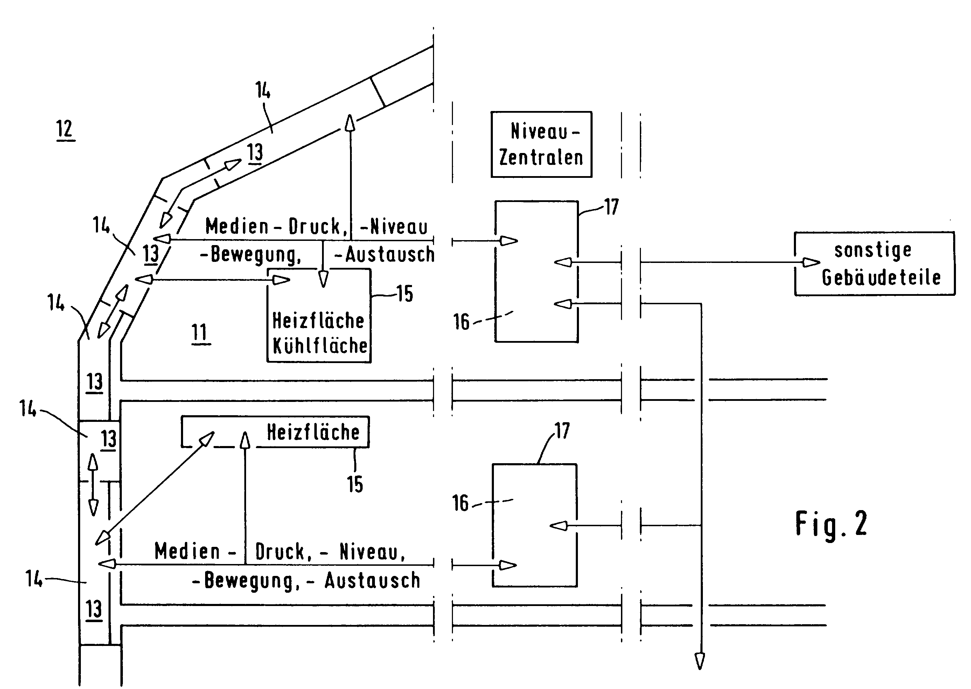

Dabei können die die Gebäudehülle 10 bildenden Bauelemente 14, die transparent oder opak ausgebildet sein können, einen gemeinsamen Hohlraum 13 in der Gebäudehülle 10 ausbilden, der von den Medien durchströmt wird und an Heiz- oder Kühlflächen 15, Geschoßspeicher 16 o. dgl. angeschlossen ist, wie dies in Fig. 2 in einem rein schematischen Gebäudeteilquerschnitt dargestellt ist. Die Geschoßspeicher 16, die in die Niveauzentralen 17 integriert sind, können an Heizungs- oder Kühlsysteme oder an andere Niveauzentralen in anderen Gebäudeteilen angeschlossen sein.

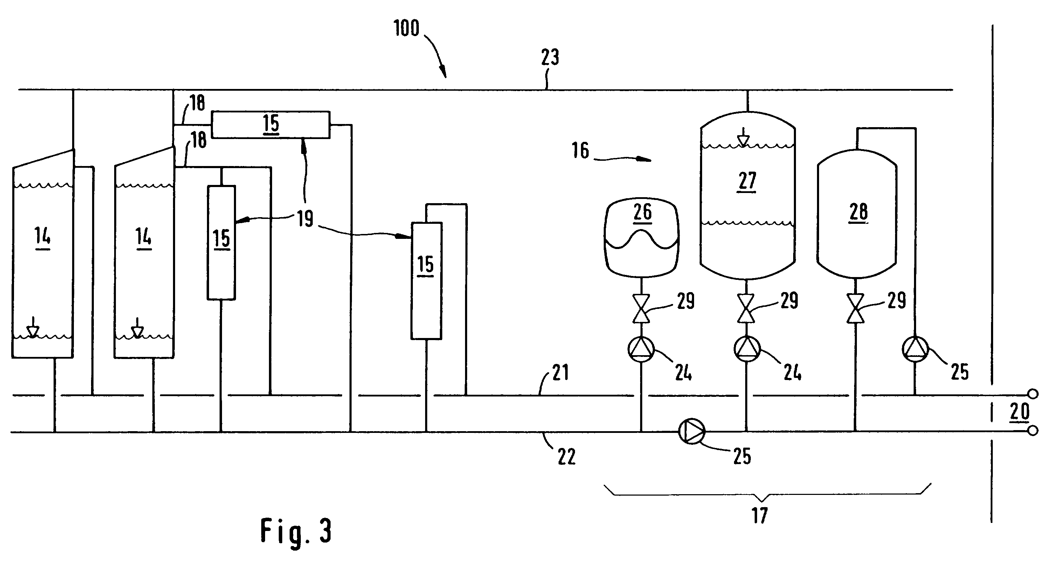

In Fig. 3 ist rein schematisch die Gestaltung einer Anlage für ein Geschoß eines Gebäudes dargestellt. Hierbei sind die Bauelemente 14 der Gebäudehülle 10 über kurze Schwerkraftleitungen 18 mit Fußboden-, Wand- und/oder Deckenheiz- oder Kühlkörpern 19 verbunden. Außerdem sind die Bauelemente 14 über eine auch für andere Zwecke wie Heizung oder Kühlung im Gebäude nutzbare Zwei-Rohranlage 20 mit umkehrbaren Vor- und Rücklauf 21, 22 sowie über eine Luftleitung 23 für den Ausgleich von Druck und Niveau verbunden.

Die Geschoß- bzw. Niveauzentrale 17, die selbst über Wärmetauscher oder direkt mit der sonstigen Anlage des Gebäudes verbunden ist, weist Meß-, Steuer- und Regeleinrichtungen, Förderpumpen 24 zur Druckhaltung und Niveauregulierung sowie Zirkulationspumpen 25 zum Wärmetransport auf. Außerdem ist ein Ausdehnungsgefäß 26 für verschiedene Druckhaltungen, ein Niveauregulierspeicher 27 für Wasser- und Gasfüllung und ein Wärmeaustausch-Speicher 28 für Wärmeverschiebungen im Gebäude vorgesehen, wobei diese drei Gefäße 26, 27, 28 auch in kompakter Bauweise in einem Gefäß zusammengefaßt werden können.

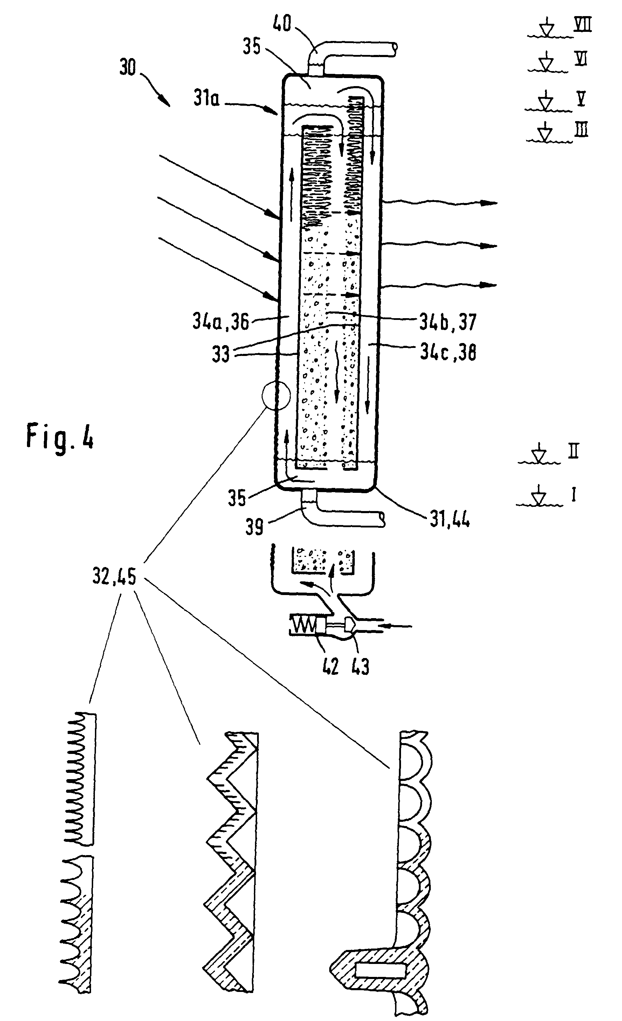

In Fig. 4 ist eine Ausführungsform des Bauelements 30 in der Gebäudehülle 10 dargestellt, und zwar in der opaken Grundform. Es handelt sich hierbei um ein erfindungsgemäßes Bauelement 30, das so gestaltet ist, daß seine Eigenschaften im Hinblick auf Wärmedurchgang und Wärmespeicherfähigkeit veränderbar sind, damit eine Umwandlung von Solarstrahlung in Wärmeenergie erfolgen kann und damit das Bauelement 30 zur Wärmedämmung, Wärmespeicherung, Wärmetransport sowie zum Heizen und Kühlen des Gebäudes 10 einsetzbar ist. Hierzu ist das Bauelement 30 außen in einer in Fig. 4 nicht dargestellten Fassade oder im Dach einzeln oder in Gruppen flächenbildend anzuordnen. Jedes Bauelement 30 besteht aus einem Behälter 31, der an der Außenseite 31a als Absorber 32 ausgebildet ist, nach innen durch gleich hohe oder verschieden hohe Trennwände 33 geschichtet ist und dadurch mehrere Kammern 34a, b, c bildet. Die Kammern 34a, b, c sind oben und unten über Verbindungen 35 miteinander verbunden, wobei die äußere Kammer 34a als Kollektor 36 dient und mindestens eine Kammer 34b mit einem lamellen-, faser- oder schwammartigen offenporigen Wärmedämmaterial 37 gefüllt ist.

Die nach innen liegende Kammer 34c dient als Wärmeübertrager 38 zur Wand bzw. zum Raum. Der Behälter 31 ist unten und oben mit Anschlußstutzen 39, 40 zur Verbindung mit einer in der Zeichnung nicht dargestellten Anlage für hydropneumatische Füllungen, Druckerhöhungen und Zirkulationen versehen. Hinter den Anschlußstutzen 39, 40 sind Rückschlagklappen 41 angeordnet, die bei Zirkulationsdruck im Vorlauf 21 (Fig. 3) den Behälter 31 schließen, während andere Rückschlagklappen zu den Heizkörpern 19 (Fig. 3) hin öffnen. Außerdem ist vorgesehen, daß am Behälter 31 oder an den Leitungen (18, 21, 22, 39, 40) zum Behälter 31 auf den Innendruck des Systems reagierende mechanische Übertrager 42 angeordnet sind, die auf Stellglieder 43 wie Ventile, Klappen und/oder Jalousien wirken, welchen den Durchgang von Licht, Luft und/oder Flüssigkeit im Bauelement 30 bestimmen.

Die Absorberfläche 32 des Behälters 31 kann entweder glatt ausgebildet sein oder sie weist eine Profilierung 45 auf, wobei zur Stabilisierung oder Wärmeleitung auch in der Zeichnung nicht dargestellte Metalleinlagen vorgesehen sein können.

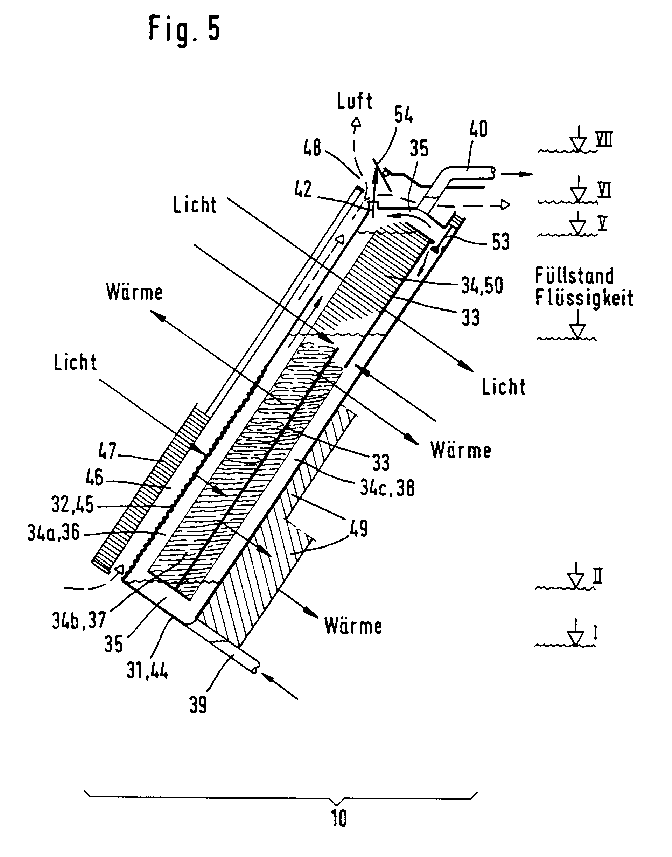

Wie in Fig. 5 dargestellt ist, kann auch vorgesehen werden, daß auf der Absorberfläche 32 ggf. auf der Profilierung 45 gebildete Abstandshalter ausgebildet sind, die eine transparente Wärmedämmschicht 47 unter Ausbildung eines Luftpolsters im Abstand 46 zwischen der Wärmedämmung 47 und der Absorberschicht 32 tragen. Der Zwischenraum 46 zwischen der transparenten Wärmedämmung 47 und der Absorberfläche 32 ist nach unten offen und kann oben nach außen oder innen über eine Öffnung 48 geöffnet werden.

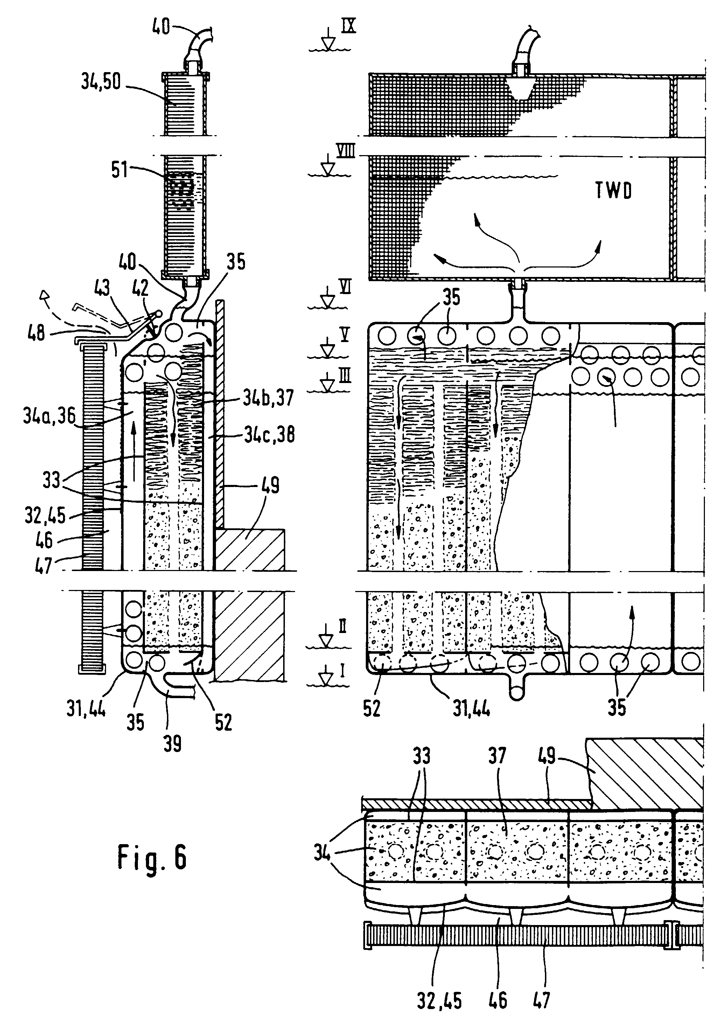

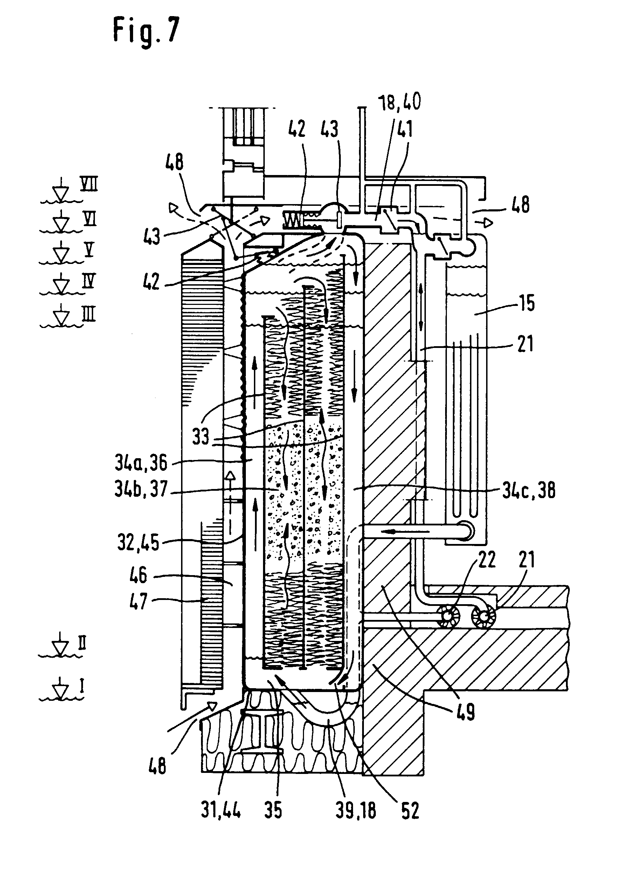

Das Bauelement 30 kann dabei so gestaltet sein, daß der Behälter 31 außen vor einer mehr oder weniger wärmespeichernden raumbegrenzenden Wandfläche 49 angeordnet ist, wobei auch vorgesehen werden kann, daß der Behälter 31 transparent ist und selbst die Raumbegrenzung und Außenschicht darstellt. Dabei können auch die Trennwände 33 transparent sein und eine oder mehrere der Kammern 34a, 34b, 34c können mit transparenter Wärmedämmung 50 gefüllt sein, die mit Flüssigkeit 51 gefüllt oder durchströmt werden kann. (Fig. 6). In den Fig. 7, 8 und 9 sind weitere Varianten des Bauelements 30 dargestellt, wobei gleiche Elemente mit den gleichen Bezugszeichen wie voranstehend versehen wurden, so daß auf die vorangegangene Beschreibung bezug genommen wird. Es ist hierbei u. a. vorgesehen, daß in den Trennwänden 33 des Behälters 31 lappenartige Ventilklappen 52 als wartungsfreie Rückschlagklappen eingebaut sind. Um die Anwendung des Verfahrens und die unterschiedlichen Füllstände mit flüssigen und gasförmigen Medien innerhalb des Bauelements 30 zu ermöglichen, ist vorgesehen, daß in dem Bauelement 30 die Höhenanordnung der äußeren Zu- und Abflüsse 39, 40, 18, 23 die inneren Abtrennungen und Verbindungen 33, 35 genau gestaffelt ist, damit die in der Zeichnung angegebenen Niveaustufen I-X der Trennung zwischen dem flüssigen und dem gasförmigen Medium unterschiedliche Durchströmungen zulassen.

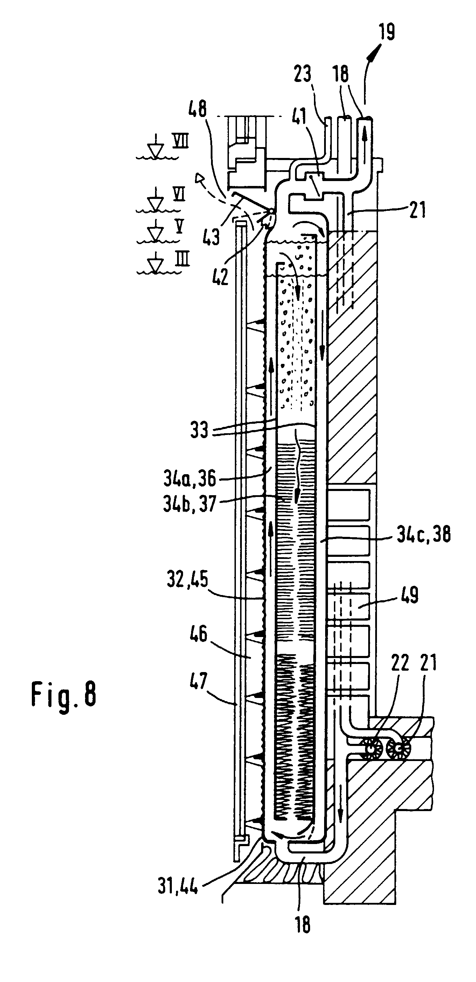

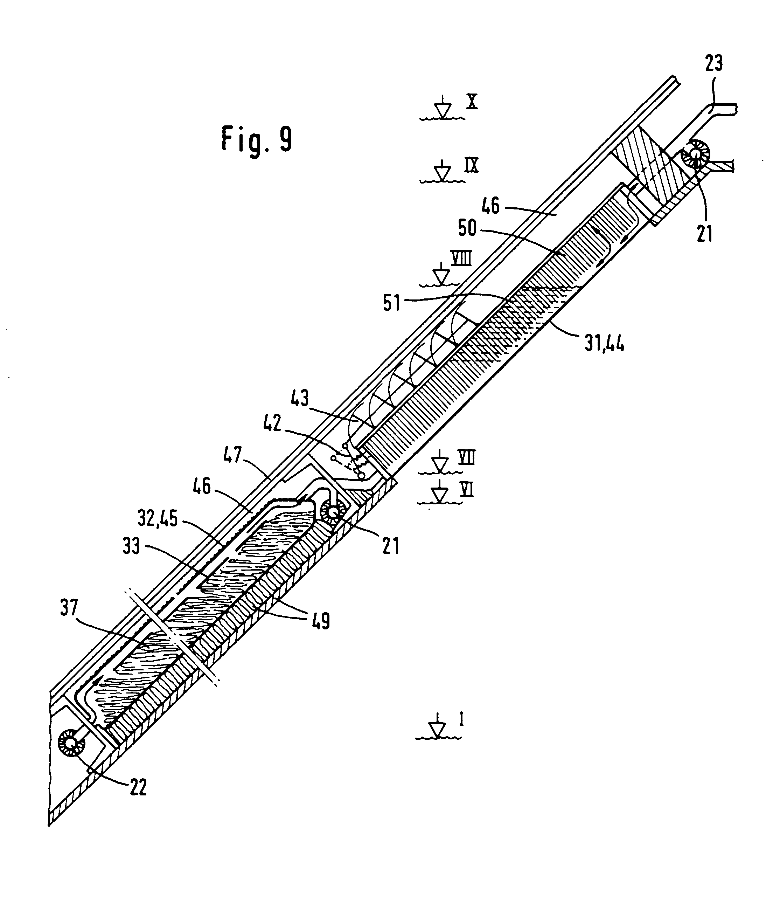

Die Niveaustufen I-X des flüssigen Mediums in den Bauelementen regeln unterschiedliche Funktionen der Gebäudehülle:
- I: Frostschutzbetrieb
Im Bauelement 14; 30 bzw. im Behälter 31 befindet sich keine Flüssigkeit, kein Wasser; Konvektion des Gases im Behälter ist möglich, d. h. die Wärmedämmung ist nicht optimal.
- II: Wärmedämmbetrieb
Alle Kammern 34 sind mit Gas bzw. mit Luft gefüllt, aber die Konvektion ist unten durch Flüssigkeit unterbrochen, die stehende Luft ergibt die optimale Wärmedämmung.
- III: Wärmespeicherung passiv und träge
Die Kammern 34 sind mit Flüssigkeit gefüllt, die Konvektion ist durch die Trennwände 33 und das Gaspolster oben unterbrochen, die Aufheizung oder Abkühlung des Mediums ist nur durch Wärmeleitung möglich, z. B. nachts bleibt der Wärmepuffer lange erhalten.
- IV, V: Ladung des Wärmespeichers passiv
Bei solarer Erwärmung zirkuliert die Flüssigkeit durch die Schwerkraft / Konvektion über die vorderen Trennwände 33 hinweg und durchströmt die Speicherkammern 34b.
- VI: Wärmetransport passiv zum Raum
Die Flüssigkeit zierkuliert von der Kollektorkammer 34a, 36 oder von den Speicherkammern 34b, 37 über die hintere Trennwand 33 hinweg in die Wärmeübertragerkammer 34c, 38 und gibt die Wärme an den angrenzenden Innenraum oder über die speichernde feste Wand 49 an den Raum ab.
- VII: Verbundbetrieb mit Raumheizkörpern und Möglichkeit für Aktivbetrieb mit Zirkulationspumpen der Anlage
Die Behälter 31 sind über die Anschlußstutzen 40 hinaus mit Flüssigkeit gefüllt, die Flüssigkeit kann mit Schwerkraft aus dem Behälter heraus zirkulieren (Fig. 7, 8) oder im Verbund mit der Anlage beliebig gepumpt werden.
- VIII: Teilverschattung und Aufwärmung im transparenten Bauelement
Die Flüssigkeit füllt zum Teil den im hydraulischen Zusammenhang oberhalb liegenden, transparent gestalteten Behälter (Fig. 6, Fig. 9) und absorbiert je nach Füllstand und Färbung der Flüssigkeit mehr oder weniger des einfallenden Lichtes.
- IX: Volle Verschattung und Wärmegewinnung im transparenten Bauelement
Die Flüssigkeit steht ohne Zirkulation im ganz gefüllten transparenten Behälter, obwohl die Flüssigkeit im unterhalb liegenden Behälter (Fig. 6, Fig. 9) über den Vor- und Rücklauf 21, 22 oder im Schwerkraftbetrieb bewegt werden kann; die Flüssigkeit erwärmt sich und mindert auf ganzer Fläche den Lichtdurchgang.
- X: Verschattung und Aktivbetrieb
Auch der transparente Behälter ist über den Anschlußstutzen 40 hinaus mit Flüssigkeit gefüllt und hydraulisch mit den Zirkulationsleitungen bzw. Vor- und Rücklauf 21, 22 verbunden, so daß bei erhöhter Sonneneinstrahlung Wärme abgeführt werden kann.

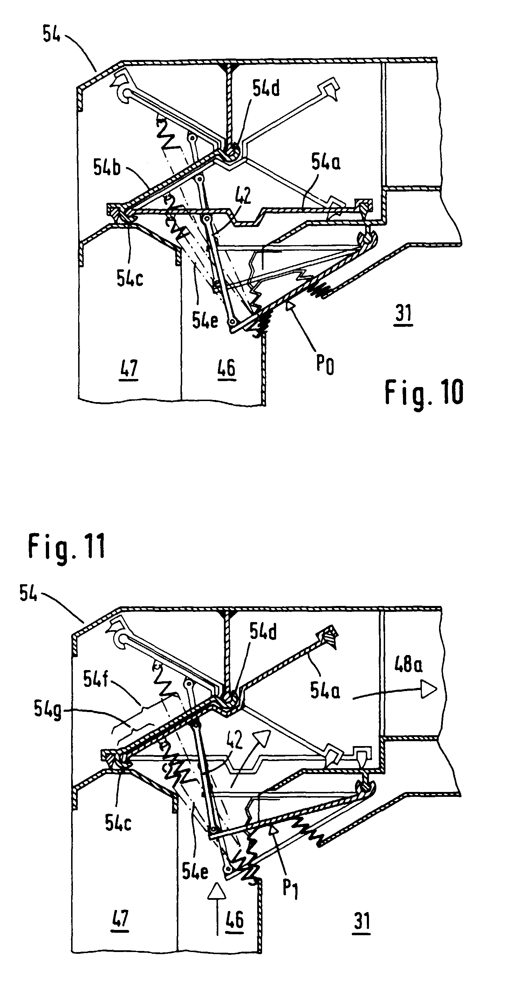

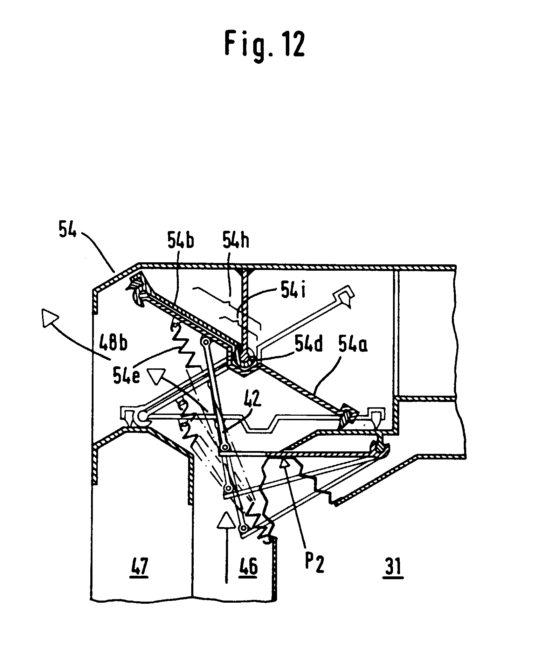

Bei der in Fig. 10, 11 und 12 dargestellten Ausführungsform besteht die Idee darin, daß durch Veränderungen des statischen Druckes in der Anlage ferngesteuert im Bauelement bzw. in allen Bauelementen einer Gebäudezone jeweils mittels einer Klappe 54 die Luftschicht im Abstand 46 zwischen der transparenten Außenschicht 47 und dem Behälter 31 oben geschlossen zu halten oder die Luftschicht zur Versorgung der Räume mit vorgewärmter Frischluft nach innen zu öffnen 48a oder zum Schutz gegen Überhitzung des Bauelements nach außen zu öffnen 48b. Um Betriebssicherheit zu erlangen, soll auch bei nicht steuerbaren Druckabweichungen PX in der Anlage für die Druckstufen P0 ± PX, P1 ± PX und P2 ± PX eine eindeutige Klappenstellung erreicht werden.

Die zweiteilige Klappe besteht aus einer Hauptklappe 54a und einer Zwischenklappe 54b, wobei die Klappe um zwei Drehpunkte 54c, 54d die Drehrichtungen und die Drehmomente wechselt und drei Betriebsstellungen einnimmt:
- Bei geschlossener Hauptklappe 54a verschließt die Zwischenklappe 54b die Verbindung zwischen dem Innenraum und der Außenluft. Eine Gewichts- oder Federkraft 54e hält die Klappe gegen den geringen statischen Druck P0 ± PX des Behälters 31 bzw. der Anlage geschlossen.
- Zur ersten Öffnung 48a der Hauptklappe 54a bis zum Anschlag ist nur das Drehmoment um den ersten Drehpunkt 54c der durch den mittelgroßen Druck P1 ± PX erzeugten Hebelkraft mal dem längeren Hebelarm 54f größer als das Drehmoment der konstanten Gewichts- oder Federkraft 54e mal dem kürzeren Hebelarm 54g. Ohne größere Druckerhöhung verharrt die Klappe in dieser Stellung.
- Zur zweiten Öffnung 48b der Hauptklappe 54a in die Gegenrichtung unter Mitnahme der Zwischenklappe 54b ist das Drehmoment um den zweiten Drehpunkt 54d bei dem kurzen Hebelarm 54i nur mit der Kraft aus dem höheren statischen Druck P2 ± PX größer als das Drehmoment der Gewichts- oder Federkraft 54e mal dem längeren Hebelarm 54h.

### Bezugszeichenliste:

- Gebäudehülle: 10
- Inneres: 11
- Umgebung: 12
- Hohlraum: 13
- Bauelement: 14; 30
- Heiz- oder Kühlfläche: 15
- Geschoßspeicher: 16
- Niveauzentrale: 17
- Leitungen: 18
- Heiz- oder Kühlkörper: 19
- Zwei-Rohranlage: 20
- Vor- und Rücklauf: 21, 22
- Luftleitung: 23
- Förderpumpe: 24
- Zirkulationspumpe: 25
- Ausdehnungsgefäß: 26
- Niveauspeicher: 27
- Wärmeaustauschspeicher: 28
- Ventile: 29
- Bauelement: 30
- Behälter: 31
- Außenseite: 31a
- Absorber: 32
- Trennwand: 33
- Kammer: 34a, 34b, 34c
- Verbindung: 35
- Kollektor: 36
- Wärmedämmaterial: 37
- Wärmeübertrager: 38
- Anschlußstutzen: 39, 40
- Rückschlagklappen: 41
- mechanischer Übertrager: 42
- Stellglied: 43
- Material: 44
- Profilierung: 45
- Abstand: 46
- Außenschicht: 47
- Öffnung: 48
- Öffnung / Luft nach innen: 48a
- Öffnung / Luft nach außen: 48b
- Wandfläche: 49
- Transparente Wärmedämmung: 50
- Flüssigkeit: 51
- lappenartige Ventilklappen: 52
- Ventile an Kammern druckabhängig: 53
- Klappe: 54
- Hauptklappe: 54a
- Zwischenklappe: 54b
- Drehpunkte: 54c, 54d
- Gewichts-, Federkraft: 54e
- Hebelarme: 54f, 54g, 54h, 54i
- Anlage: 100

## Patentansprüche

1. Verfahren zur Veränderung der Funktion von Gebäudehüllen im Hinblick auf Licht-, Luft- und/oder Wärmeübergang und -durchgang, insbesondere zur Veränderung dieser technischen Funktion in neukonstruierten Außenwänden und/oder Dächern oder Teilen von diesen als physikalische Grenzflächen zwischen dem Gebäudeinnenraum und der Gebäudeumgebung, wobei die Gebäudehüllen mit oder ohne transparente, wärmedämmende äußere Wetterschutzschicht nach Bedarf und Angebot geregelt Licht absorbieren und in Wärme umwandeln und welche die Wärme über Trägermedien in der Gebäudehülle bewegen und speichern und/oder aus der Gebäudehülle herausbewegen lassen, um sie nach Bedarf an anderer Stelle oder zu anderem Zeitpunkt zur Verwendung bereitzustellen,
und/oder wobei die Gebäudehüllen Licht und/oder Luft in das Innere durchlassen können, damit in den Innenräumen die klimatischen und optischen Verhältnisse dem Nutzungsbedarf entsprechend eingestellt werden können, wobei mindestens ein Hohlraum, der ein wesentliches Volumen zwischen den inneren und äußeren Begrenzungsmaterialien der Gebäudehülle zur Aufnahme einer Wärmespeichermasse bildet, vorgesehen ist,
dadurch gekennzeichnet, daß in einer mindestens in Teilen nur teilweise mit fester Speichermasse geschichteten Gebäudehülle die bauphysikalisch wirkenden Schichten verändert werden, indem in dem Hohlraum flüssige und gasförmige Medien mittels einer hydropneumatischen gebäudetechnischen Anlage mit Einrichtungen zum Messen, Steuern und Regeln manipuliert werden, indem in den Hohlräumen Medien mit verschiedenen Eigenschaften ausgetauscht werden,
Füllstände der Medien geändert werden, Drücke verändert werden und/oder Temperaturen verändert oder ausgetauscht werden und sich durch diese Änderungen der Stoffe und Energiepotentiale in den Hohlräumen die physikalischen Eigenschaften der ganzen Gebäudehülle verändern und sich folgende Betriebszustände der Gebäudehülle einstellen lassen, wie:
a) optimaler Wärmedämmbetrieb oder Wärmespeicherbetrieb durch den Austausch von gasförmigen und flüssigen Medien mit verschiedenen Eigenschaften in der Gebäudehülle,
b) Betriebszustände der unterschiedlichen Bewegbarkeit der Medien, durch Änderung des genau abgestuften Füllstandes in Hohlräumen mit vertikalen Unterteilungen und/oder in mehreren Hohlräumen auf einem Höhenniveau der Gebäudehülle, wozu die Hohlräume und/oder Unterteilungen der Hohlräume unten miteinander und mit der haustechnischen Anlage verbunden sind und oben nur für einige in der Höhe genau bestimmte Füllstände für das Überströmen oder Durchströmen der Flüssigkeit verbunden sind,
wobei mit der Bewegbarkeit der Medien die Geschwindigkeit der Wärmeausbreitung und der Ort der Wärmespeicherung in der Gebäudehülle beeinflußt wird,
c) Betriebszustände mit unterschiedlichem Licht- oder Luftdurchlaß von außen oder Mediendurchlaß in den oder zu den Hohlräumen der Gebäudehülle, dadurch gesteuert, daß unterschiedliche, in der gebäudetechnischen Anlage zentral erzeugte Druckstufen den statischen Druck der Medien in den Hohlräumen und in den Leitungsverbindungen der Gebäudehülle überlagern und bestimmte Bewegungen von Bauteilen oder Stellgliedern auslösen, die Licht, Außenluft oder Wärmeträgermedien passieren lassen,
d) Betriebszustände der Heizung oder Kühlung bzw. der Wärmeaufnahme oder -abgabe nach innen oder nach außen durch Beaufschlagen der Masse der Gebäudehülle mit Temperaturen über oder unter Raumtemperatur, indem Wärmeträgermedien aus zentralen Speichern in die Hohlräume der Gebäudehülle gefüllt oder Wärmeträgermedien in den Hohlräumen ausgetauscht werden, wobei die Wärme den unterschiedlichen Temperaturgefällen entsprechend im jeweils gleichzeitig von der Speichermasse zum Innenraum und nach außen, von außen zur Speichermasse und zum Innenraum, von innen zur Speichermasse und nach außen oder jeweils umgekehrt geführt wird.

2. Verfahren nach Anspruch 1,
dadurch gekennzeichnet,
daß in lichtdurchlässigen Teilen der Gebäudehülle, die in den Hohlräumen tranzluzente Wärmedämmmaterialien enthalten, gefärbte Flüssigkeiten die eingeleit werden, die optischen und die wärmeabsorbierenden Eigenschaften der Gebäudehülle verändern.

3. Anlage (100), insbesondere zur Durchführung des Verfahrens nach einem der Ansprüche 1 bis 2, zur Veränderung der Funktion einer Gebäudehülle (10) oder eines oder mehrerer Bauelemente (14; 30) der Gebäudehülle (10), insbesondere der Außenwände und/oder der der Dachfläche als physikalische Grenzflächen zwischen dem Gebäudeinnenraum (11) und der Gebäudeumgebung (12) im Hinblick auf Licht-, Gas- und/oder Wärmeübergang und -durchgang, welche Anlage die Gebäudehülle über ein Leitungsnetz zum Transport von Wärmeträgermedien mit einer Niveauzentrale bzw. Geschoßzentrale (17) und mit einer sonstigen zentralen Anlage zum Heizen und/oder Kühlen von Gebäuden verbindet, wobei Hohlräume (13) in der Gebäudehülle (10) oder Bauelemente (14) der Gebäudehülle (10) mit Hohlräumen (13) ausgebildet sind,
dadurch gekennzeichnet,
daß in den Hohlräumen (13) zur Veränderung der Eigenschaften der Gebäudehülle (10) gasförmige und flüssige Medien manipuliert werden, und daß die Hohlräume oder die Bauelemente mit Hohlräumen über kurze Schwerkraftleitungen (18) mit Fußboden-, Wand- und/oder Deckenheizflächen (15) verbunden sind und über eine auch für die Heizung oder Kühlung im Gebäude nutzbare Zweirohranlage (20) mit umkehrbarem Vor- und Rücklauf (21, 22) sowie über eine Luftleitung (23) für den Ausgleich von Druck und Niveau verbunden sind mit einer Geschoß- bzw. Niveauzentrale (17), die selbst über Wärmetauscher oder direkt mit der Anlage des Gebäudes verbunden ist und mindestens enthält: Meß-, Steuer- und Regeleinrichtungen, Förderpumpen (24) zur Druckhaltung und Niveauregulierung sowie Zirkulationspumpen (25) zum Wärmetransport, Ventile (29) und ein Ausdehnungsgefäß (26) für verschiedene Druckhaltungen, ein Niveauregulier-Speicher (27) für Wasser- und Gasfüllung und einen Wärmeaustausch-Speicher (28) für Wärmeverschiebungen im Gebäude, wobei diese drei Gefäße auch in kompakter Bauweise in eines zusammenfaßbar sind.

4. Anlage nach Anspruch 3,
dadurch gekennzeichnet,
daß mindestens ein Speicher gefärbte Flüssigkeit enthält, die zur Schattierung und/oder Wärmegewinnung in transparente Wärmedämmelemente gepumpt wird.

5. Anlage nach einem der Ansprüche 3 oder 4,
dadurch gekennzeichnet,
daß eine Einrichtung zum Messen, Steuern und Regeln von einer Vielzahl von Flüssigkeitsniveaus und einer Anzahl von Druckstufen über dem höhenbedingten statischen Druck des Systems je Gebäudegeschoß bzw. Gebäudehöhenabschnitt in Verbindung mit einer zentralen Recheneinheit für das Gebäude, die alle Angebote und Bedarfe von Licht, Luft und Wärme verrechnet und insbesondere die für das ganze System energiesparenden Wege der Wärmeströme durch die Gebäudehülle ermittelt und danach die optimalen Betriebszustände in der Gebäudehülle (10) einstellt.

6. Bauelement einer Gebäudehülle (10) mit veränderbaren Eigenschaften zur Veränderung der Funktion der Gebäudehülle im Hinblick auf Licht-, Luft- und/oder Wärmeübergang und -durchgang, insbesondere zur Durchführung des Verfahrens nach den Ansprüchen 1 und 2 und zur Verwendung in einer Anlage nach den Ansprüchen 3 bis 5, welches Solarstrahlung und Umweltwärme aufnimmt oder Wärme an die Außenluft abgibt und welches Wärme über ein Wärmeträgermedium passiv durch Schwerkraft oder aktiv durch die Verbindung mit der Zirkulation einer Anlage eines Gebäudes transportieren und speichern läßt und damit zum Heizen und Kühlen des Gebäudes beiträgt, wobei als Bauelement (14; 30) zur Bildung eines Hohlraums in der Gebäudehülle einzeln oder in Gruppen flächenbildend mindestens ein Behälter (31) angeordnet ist, der einen Teil oder die Gänze des Querschnitts der Hülle einnimmt,
dadurch gekennzeichnet,
daß eine einzige oder mehrere durch innere, zur Gebäudeaußenfläche parallele Trennwände (33) geschichtete Kammern (34a, 34b, 34c) bildet und und die Kammern (34a, 34b, 34c) oben und unten miteinander (35) verbunden sind und mindestens eine Kammer (34b) mit einem lamellen-, faser-, schwamm- oder wabenartigen offenporigen, von Medien durchströmbaren und entleerbaren Wärmedämmmaterial (37) gefüllt ist, und diese oder eine zusätzliche nach außen parallel liegende Kammer (34a) als Wärmekollektor (36) oder Kühler dient, und wovon eine nach innen liegende Kammer (34c) als Wärmeübertrager (38) zwischen dem Behälter und dem Innenraum direkt oder anliegend als Übertr Innenschale der Gebäudehülle dient, und welcher Behälter (31) unten und oben Anschlußstutzen (39, 40) zur Verbindung mit einer Anlage für hydropneumatische Füllungen, Druckerhöhungen und Zirkulationen aufweist.

7. Bauelement nach Anspruch 6,
dadurch gekennzeichnet,
daß in dem Bauelement (30) die Höhenanordnung der äußeren Zu- und Abflüsse (39, 40, 18, 23), der inneren Abtrennung und Verbindung (33, 35, 52) genau gestaffelt ist, damit eine Vielzahl von unterschiedlichen Niveaustufen (I bis X) der Trennung zwischen dem flüssigen und dem gasförmigen Medium unterschiedliche Überströmungen und Durchströmungen zulassen, die über den Gleichstand des jeweiligen Flüssigkeitsniveaus in einem Niveau- bzw. Geschoßabschnitt der Anlage zentral gesteuert werden können.

8. Bauelement nach Anspruch 6 und 7,
dadurch gekennzeichnet,
daß hinter den Anschlußstutzen (39, 40) Rückschlagklappen (41) angeordnet sind, die bei Zirkulationsdruck im Vorlauf (21) der Anlage (100) den Behälter (31) schließen, wobei andere Rückschlagklappen zu Heizkörpern (19) hin öffnen.

9. Bauelement nach Anspruch 7 oder 8,
dadurch gekennzeichnet,
daß am Behälter (31) oder an den Leitungen zum Behälter (18, 21, 23, 39, 40) auf den Innendruck des Systems reagierende mechanische Übertrager (42) angeordnet sind, die auf Stellglieder (43) wie Ventile, Klappen, Jalousien wirken, welche den Durchgang von Licht, Luft und/oder Flüssigkeit im Bauelement bestimmen, und die eine Klappe (54) über der Luftschicht im Abstand (46) betätigen.

10. Bauelement nach einem der Ansprüche 7 bis 9,
dadurch gekennzeichnet,
daß der Behälter (31) aus Metall, Glas, Keramik, Zementbaustoffen, Kunststoff oder Gummi oder aus einer Kombination von mehreren Materialien (44) besteht.

11. Bauelement nach einem der Ansprüche 7 bis 10,
dadurch gekennzeichnet,
daß der Behälter (31) an der Außenseite (31a) als Absorber (32) ausgebildet ist.

12. Bauelement nach Anspruch 11,
dadurch gekennzeichnet,
daß die Absorberfläche (32) glatt oder profiliert (45) ausgebildet ist.

13. Bauelement nach Anspruch 11,
dadurch gekennzeichnet,
daß die Absorberfläche (32) zur Stabilisierung und/oder zur Wärmeleitung mit Metalleinlagen versehen ist.

14. Bauelement nach einem der Ansprüche 7 bis 13,
dadurch gekennzeichnet,
daß der Behälter (31) innen mit einem Abstand (46) hinter einer transparenten, wärmedämmenden Außenschicht (47) angeordnet ist.

15. Bauelement nach einem der Ansprüche 7 bis 14,
dadurch gekennzeichnet,
daß die durch den Abstand (46) gebildete Luftschicht vor dem Behälter (31) unten offen ist und oben nach außen und/oder nach innen durch eine Klappe (54) zu öffnen (48) ist.

16. Bauelement nach einem der Ansprüche 7 bis 15,
dadurch gekennzeichnet,
daß der Behälter (31) außen vor einer wärmespeichernden raumbegrenzenden Wandfläche (49) angeordnet ist.

17. Bauelement nach einem der Ansprüche 7 bis 16,
dadurch gekennzeichnet,
daß der Behälter (31) transparent ist, selbst Raumbegrenzung und Außenschicht darstellt, mit oder ohne Trennwände (33) eine oder zwei Kammern (34a, 34b) enthält, von denen eine mit transparenter Wärmedämmung (50) gefüllt ist, die mit Flüssigkeit (51) füllbar oder durchströmbar ist.

18. Bauelement nach einem der Ansprüche 7 bis 17,
dadurch gekennzeichnet,
daß in den Trennwänden (33) des Behälters (31) lappenartige Ventilklappen (52) als wartungsfreie Rückschlagklappen eingebaut sind.

19. Bauelement nach einem der Ansprüche 7 bis 17,
dadurch gekennzeichnet,
daß in dem Bauelement (30) die Kammern (34a, 34b, 34c) in dem Behälter (31) durch Ventile (53), die auf die Veränderung des statischen Drucks der Medien in der Anlage reagieren, verschließbar sind.

20. Bauelement nach einem der Ansprüche 7 bis 19,
dadurch gekennzeichnet,
daß eine Klappe (54) über der Luftschicht im Abstand (46) zwischen Außenschicht (47) und Behälter (31) in Abhängigkeit von Stufen unterschiedlichen statischen Druckes mindestens die drei Stellungen einnimmt, geschlossen ist oder zum Innenraum hin (48 a) oder nach außen (48 b) offen ist.

21. Bauelement nach Anspruche 20,
dadurch gekennzeichnet,
daß die Klappe (54) zweiteilig (54 a, 54 b) ist und um zwei Drehpunkte (54 c, 54 d) faltend mit der Drehrichtung das Drehmoment wechselt, wodurch unterschiedliche Druckkräfte P0, P1, P2 gegen konstante Gewichts- oder Federkräfte (54 e) unterschiedliche Bewegungen der Klappe auslösen, um verschiedene Luftströmungen (48 a, 48 b) zuzulassen, dadurch hervorgerufen, daß der von Druckänderungen bewegte mechanische Übertrager (42) die Klappe (54) zwischen beiden Drehpunkten (54c, 54d) erfaßt und in drei Betriebsstellungen verstellt:
- Bei geschlossener Hauptklappe (54a) verschließt die Zwischenklappe (54b) die Verbindung zwischen dem Innenraum und der Außenluft, wobei eine Gewichts- oder Federkraft (54e) die Klappe gegen den geringen statischen Druck P0 ± PX des Behälters (31) bzw. der Anlage geschlossen hält.
- Zur ersten Öffnung (48a) der Hauptklappe (54a) bis zum Anschlag ist nur das Drehmoment um den ersten Drehpunkt (54c)der durch den mittelgroßen Druck P1 ± PX erzeugten Hebelkraft mal dem längeren Hebelarm (54f) größer als das Drehmoment der konstanten Gewichts- oder Federkraft (54e) mal dem kürzeren Hebelarm (54g), so daß ohne größere Druckerhöhung die Klappe in dieser Stellung verharrt.
- Zur zweiten Öffnung (48b) der Hauptklappe (54a) in die Gegenrichtung unter Mitnahme der Zwischenklappe (54b) ist das Drehmoment um den zweiten Drehpunkt (54d) bei dem kurzen Hebelarm (54i) nur mit der Kraft aus dem höheren statischen Druck P2 ± PX größer als das Drehmoment der Gewichts- oder Federkraft (54e) mal dem längeren Hebelarm (54h).

## Claims

1. A method for varying the function of shells of buildings with respect to light, air and/or heat transition and transmission, especially for varying this technical function in new built outside walls and/or roofs or parts thereof as physical interfaces between the building interior space and the building surroundings, whereby the building shells with or without transparent, heat insulating outer weather protective layer absorb light, this being controlled by supply and demand, and convert it into heat and which move and store heat in the building shell over carrier media and/or let it move out from the building shell so as to make it available for use on demand at another place or at another time, and/or whereby the building shells can transmit light and/or air to the inside so that the climatic and optical conditions indoors can be adjusted correspondingly to the utilization need, whereby at least one hollow space which constitutes an important volume between the inner and outer delimitation materials of the building shell for receiving a heat storage mass is provided for,
characterized in
that in a building shell stratified at least in parts only partially with a solid storage mass the layers which are active with respect to building physics are changed, liquid and gaseous media being manipulated in the hollow space by means of a hydropneumatic building technical installation with devices for measuring, controlling and regulating, whereby in the hollow spaces media with different properties are exchanged, media filling levels are changed, pressures are varied and/or temperatures are varied or exchanged and the physical properties of the whole building shell are changed by these changes of the substances and energy potentials in the hollow spaces and the following operating states of the building shell can be adjusted such as :
a) optimal heat insulation operation or heat storage operation through the exchange of gaseous and liquid media with different properties in the building shell,
b) operating states with different movability of the media through the change of the exactly graduated filling level in hollow spaces with vertical subdivisions and/or in several hollow spaces at a height level of the building shell, for which purpose the hollow spaces and/or subdivisions of the hollow spaces are connected at the bottom with each other and with the domestic technical installation and on top only for a few filling levels, the height of which is precisely definite, for the liquid overflowing or direct flowing, whereby the heat diffusion rate and the place of the heat storage in the building shell is influenced with the movability of the media,
c) operating states with different light or air transmission from outside or media transmission in or to the hollow spaces of the building shell, controlled by the fact that different pressure stages centrally generated in the building technical installation interfere with the statical pressure of the media in the hollow spaces and in the conduit connections of the building shell and trigger certain moves of components or actuators which let light, outer air or heat carrier media pass through,
d) operating states of heating or cooling or heat absorption or emission to the inside or to the outside through loading of the mass of the building shell with temperatures over or below the ambient temperature, heat carrier media from central storage units being filled into the hollow spaces of the building shell or heat carrier media being exchanged in the hollow spaces, whereby the heat is conducted correspondingly to the different temperature drops respectively simultaneously from the storage mass to the interior space and to outside, from outside to the storage mass and to the interior space, from inside to the storage mass and to outside or respectively the other way round.

2. A method according to claim 1,
characterized in
that coloured liquids which change the optical and heat absorbing properties of the building shell are introduced in light transmitting parts of the building shell which contain translucent heat insulating materials in the hollow spaces.

3. An installation, namely for carrying out the method according to one of the claims 1 to 2 for varying the function of a building shell (10) or of one or several components (14 ; 30) of the building shell (10), especially of the outside walls and/or the roof surface as physical interfaces between the building interior space (11) and the building environment (12) with respect to light, gas and/or heat transition and transmission, installation which connects the building shell over a network for the transport of heat carrier media with a level central unit and/or a floor central unit (17) and with another central installation for heating and/or cooling buildings, whereby hollow spaces (13) are constituted in the building shell (10) or components (14) of the building shell (10) with hollow spaces (13),
characterized in
that in the hollow spaces (13) for varying the properties of the building shell (10) gaseous and liquid media are manipulated and that the hollow spaces or the components with hollow spaces are connected over short gravity lines (18) with floor, wall and ceiling heating surfaces (15) and over a split installation (20) also useful for heating or cooling in the buidling with reversible flow and return (21, 22) as well as over an air pipe (23) for the compensation of pressure and level with a floor or level central unit (17) which is itself connected over heat exchangers or directly with the installation of the building and which comprises at least : measuring, controlling and regulating devices, feed pumps (24) for pressure maintaining and level adjustment as well as circulation pumps (25) for the heat transport, valves (29) and an expansion tank (26) for different pressure maintaining states, a level control storage tank (27) for water and gas filling and a heat exchange storage tank (28) for heat displacements in the building, these three tanks also being able to be combined together to one in a compact way.

4. An installation according to claim 3,
characterized in
that at least one storage tank contains coloured liquid which is pumped into transparent heat insulating elements for shadowing and/or heat recovery.

5. An installation according to one of the claims 3 or 4,
characterized in
that a device for measuring, controlling and adjusting a multitude of liquid levels and a multitude of pressure stages above the height determined statical pressure of the system calculates per building floor or building height section in connection with a central arithmetic unit for the building all supplies and demands of light, air and heat and especially determines the paths of the heat flows through the building shell which save energy for the whole system and then adjusts the optimal operating states in the building shell (10).

6. A component of a building shell (10) with changeable properties for varying the function of the building shell with respect to light, air and/or heat transition and transmission, especially for carrying out the method according to the claims 1 and 2 and for using in an installation according to the claims 3 to 5, which absorbs solar radiation and ambient heat or delivers heat to the outer air and which lets transport and store heat over a heat carrier medium passively through gravity or actively through the connection with the circulation of an installation of a building and which thus contributes to the heating and cooling of the building, whereby at least one container (31) is placed as a component (14 ; 30) for constituting a hollow space in the building shell individually or in groups for constituting a surface, container which takes a part of or the whole cross-section of the shell,
characterized in
that a single or several inner partition walls (33) parallel to the building outer surface constitute stratified compartments (34a, 34b, 34c) and the compartments (34a, 34b, 34c) are connected with each other (35) on top and at the bottom and at least one compartment (34b) is filled with a lamellar, fiber-type, spongy or honeycombed open-pore heat insulating material (37) which can be flown through by media and which can be purged and this compartment or an additionnal compartment (34a) situated parallel to the outside serves as a thermal collector (36) or as a cooler and one compartment (34c) of which, situated to the inside, serves as a heat transmitter (38) between the container and the interior space or adjacent as inner shell of the building shell, and the container (31) showing at the bottom and on top connecting branches (39, 40) for connection with an installation for hydropneumatic fillings, rises of pressure and circulations.

7. A component according to claim 6,
characterized in
that in the component (30) the height arrangement of the outer admissions and discharges (39, 40, 18, 23), of the inner separation and connection (33, 35, 52) is exactly graduated so that a multtitude of different level stages (I to X) of the separation between the liquid and the gaseous medium admit different overflowings and direct flowings which can be centrally controlled over the even level of the respective liquid level in a level or floor section of the installation.

8. A component according to claim 6 and 7,
characterized in
that behind the connecting branches (39, 40) return valves (41) are placed which close the container (31) by circulation pressure in the flow travel (21) of the installation (100), whereby other return valves open to heating radiators (19).

9. A component according to claim 7 or 8,
characterized in
that mechanical transmitters (42) reacting on the inner pressure of the system are placed on the container (31) or on the pipes to the container (18, 21, 23, 39, 40), transmitters which react on actuators (43) such as valves, flaps, shutters which determine the flow of light, air and/or liquid in the component and which actuate a flap (54) at an interval (46) over the air layer.

10. A component according to one of the claims 7 to 9,
characterized in
that the container (31) is made of metal, glass, ceramics, cement-based building materials, plastics or rubber or of a combination of several materials (44).

11. A component according to one of the claims 7 to 10,
characterized in
that the container (31) is configured on the outside (31a) as an absorber (32).

12. A component according to claim 11,
characterized in
that the absorber surface (32) is configured smooth or profiled (45).

13. A component according to claim 11,
characterized in
that the absorber surface (32) is provided with metal inserts for stabilization and/or heat conduction.

14. A component according to one of the claims 7 to 13,
characterized in
that the container (31) is placed inside with an interval (46) behind a transparent, heat insulating outer layer (47).

15. A component according to one of the claims 7 to 14,
characterized in
that the air layer constituted by the interval (46) in front of the container (31) is open at the bottom and can be opened on top to the outside and/or to the inside by a flap (54).

16. A component according to one of the claims 7 to 15,
characterized in
that the container (31) is placed outside in front of a heat storing space limiting wall surface (49).

17. A component according to one of the claims 7 to 16,
characterized in
that the container (31) is transparent, represents itself space limitation and outer layer, with or without partition walls (33), contains one or two compartments (34a, 34b), one of which is filled with transparent heat insulation (50) which can be filled with liquid (51) or which can be flown through.

18. A component according to one of the claims 7 to 17,
characterized in
that tab-type flap valves (52) are integrated in the partition walls (33) of the container (31) as maintenance-free return valves.

19. A component according to one of the claims 7 to 17,
characterized in
that in the component (30) the compartments (34a, 34b, 34c) in the container (31) can be closed by valves (53) which react on the variation of the statical pressure of the media in the installation.

20. A component according to one of the claims 7 to 19,
characterized in
that a flap (54) over the air layer at an interval (46) between the outer layer (47) and the container (31) takes the three positions, is closed or is open to the interior space (48a) or is open to outside (48b), depending on stages of different statical pressure.

21. A component according to claim 20,
characterized in
that the flap (54) has two parts (54a, 54b) and folding about two pivots (54c, 54d) changes the torque with the sense of rotation, so that different forces of pressure P0, P1, P2 against constant weights or elastic forces (54e) release different movements of the flap to admit different air flows ir (48a, 48b) caused by the fact that the mechanical transmitter (42) moved by pressure variations grasps the flap (54) between two pivots (54c, 54d) and adjusts it in three operating positions :
- The main flap (54a) being closed, the intermediate flap (54b) closes the junction between the interior space and the outer air, whereby a weight or an elastic force (54e) helds the flap closed against the low statical pressure P0 ± PX of the container (31) or of the installation.
- For the first opening (48a) of the main flap (54a) up to the limit stop, only the torque about the first pivot (54c) of the leverage generated by the medium sized pressure P1 ± PX by the longer lever arm (54f) is higher than the torque of the constant weight or elastic force (54e) by the shorter lever arm (54g) so that the flap remains in this position without bigger increase of pressure.
- For the second opening (48b) of the main flap (54a) into the opposite direction by catching the intermediate flap (54b), the torque about the second pivot (54d) for the short lever arm (54i) is only with the force from the higher statical pressure P2 ± PX higher than the torque of the weight or elastic force (54e) by the longer lever arm (54h).

## Revendications

1. Procédé pour modifier la fonction d'enveloppes de bâtiment pour ce qui est de la transition et de la transmission de lumière, d'air et/ou de chaleur, en particulier pour modifier cette fonction technique dans des murs extérieurs et/ou des toits nouvellement construits ou dans des parties de ceux-ci comme interfaces physiques entre l'espace intérieur du bâtiment et l'environnement du bâtiment, les enveloppes du bâtiment avec ou sans couche de protection extérieure calorifuge transparente contre les intempéries absorbant la lumière en se réglant sur l'offre et la demande et la transformant en chaleur et laissant se déplacer et accumuler la chaleur dans l'enveloppe de bâtiment par des milieux porteurs et/ou la laissant se déplacer et sortir de l'enveloppe du bâtiment pour la mettre à disposition pour être utilisée au besoin à un autre endroit ou à un autre moment et/ou les enveloppes de bâtiment pouvant laisser passer de la lumière et/ou de l'air dans l'intérieur pour que les conditions climatiques et optiques puissent être réglées dans les pièces intérieures en correspondant aux besoins de l'utilisation, au moins un espace creux qui forme un volume important entre les matériaux de délimitation intérieurs et extérieurs pour recevoir une masse d'accumulation de chaleur étant prévu,
caractérisé en ce
que, dans une enveloppe de bâtiment stratifiée au moins en parties seulement partiellement avec une masse d'accumulation solide, les couches qui agissent sur le plan de la physique du bâtiment sont modifiées, des milieux liquides et gazeux étant manipulés dans l'espace creux au moyen d'une installation hydropneumatique de technique du bâtiment avec des dispositifs pour mesurer, commander et asservir, des milieux avec différentes propriétés étant échangés dans les espaces creux, des niveaux de remplissage des milieux étant modifiés, des pressions étant variées et/ou des températures variées ou remplacées et les propriétés physiques de l'ensemble de l'enveloppe du bâtiment étant modifiées par ces changements des matières et des potentiels d'énergie dans les espaces creux et les états de fonctionnements suivants de l'enveloppe du bâtiment se laissant régler tels que :
a) mode d'isolation thermique optimal ou mode d'accumulation de chaleur par échange de milieux gazeux et liquides avec différentes propriétés dans l'enveloppe de bâtiment,
b) états de fonctionnement de différente mobilité des milieux par changement du niveau de remplissage gradué avec précision dans des espaces creux avec des divisions verticales et/ou dans plusieurs espaces creux à un niveau de hauteur de l'enveloppe du bâtiment, ce pour quoi les espaces creux et/ou les divisions des espaces creux sont reliés en bas les uns aux autres et sont reliés à l'installation de technique domestique et ne sont reliés en haut que pour quelques niveaux de remplissage déterminés avec précision en hauteur pour le débordement ou le passage du liquide, la vitesse de la propagation de la chaleur et le lieu de l'accumulation de chaleur dans l'enveloppe de bâtiment étant influencés avec la mobilité des milieux,
c) états de fonctionnement avec passage différencié de la lumière et de l'air de l'extérieur ou passage des milieux dans les espaces creux ou vers les espaces creux de l'enveloppe de bâtiment, commandés par le fait que différents étages de pression générés de manière centrale dans l'installation de technique du bâtiment se superposent à la pression statique des milieux dans les espaces creux et dans les raccordements de conduite de l'enveloppe de bâtiment et déclenchent certains mouvements des composants ou des composants de réglage qui laissent passer de la lumière, de l'air extérieur ou des milieux caloporteurs,
d) états de fonctionnement du chauffage ou du refroidissement et/ou de l'absorption de chaleur ou de transmission de chaleur vers l'intérieur ou vers l'extérieur par charge de la masse de l'enveloppe du bâtiment avec des températures au-dessus ou au-dessous de la température ambiante, des milieux caloporteurs provenant d'accumulateurs centraux étant remplis dans les espaces creux de l'enveloppe du bâtiment ou des milieux caloporteurs étant échangés dans les espaces creux, la chaleur étant conduite selon les différentes chutes de température respectivement simultanément de la masse d'accumulation vers l'espace intérieur et vers l'extérieur, de l'extérieur vers la masse d'accumulation et vers l'espace intérieur, de l'intérieur vers la masse d'accumulation et vers l'extérieur ou respectivement vice-versa.

2. Procédé selon la revendication 1,
caractérisé en ce
que des liquides colorés qui changent les propriétés optiques et d'absorption de chaleur de l'enveloppe de bâtiment sont introduits dans des parties perméables à la lumière de l'enveloppe de bâtiment qui contiennent des matériaux calorifuges translucides dans les espaces creux.

3. Installation (100), en particulier pour exécuter le procédé selon l'une des revendications 1 à 2, pour modifier la fonction d'une enveloppe de bâtiment (10) ou d'un ou de plusieurs composants (14 ; 30) de l'enveloppe de bâtiment (10), en particulier des murs extérieurs et/ou de la surface de toit comme interfaces physiques entre l'espace intérieur du bâtiment (11) et l'environnement du bâtiment (12) pour ce qui est de la transition et de la transmission de lumière, de gaz et/ou de chaleur, installation qui relie l'enveloppe de bâtiment par un réseau de tuyauteries pour le transport de milieux caloporteurs à une centrale de niveau ou à une centrale d'étage (17) et à une autre installation centrale pour chauffer et/ou refroidir des bâtiments, des espaces creux (13) étant configurés dans l'enveloppe de bâtiment (10) ou des composants (14) de l'enveloppe de bâtiment (10) étant configurés avec des espaces creux (13),
caractérisée en ce
que des milieux gazeux et liquides sont manipulés dans les espaces creux (13) pour modifier les propriétés de l'enveloppe de bâtiment (10) et que les espaces creux ou les composants avec les espaces creux sont reliés par de courtes conduites par gravité (18) à des surfaces chauffantes de sol, de mur et/ou de plafond (15) et par une installation à deux tyauteries (20) avec aller et retour réversible (21, 22) utilisable également pour le chauffage ou le refroidissement dans le bâtiment ainsi que par une tuyauterie d'air (23) pour la compensation de la pression et du niveau à une centrale d'étage et/ou de niveau (17) qui est elle-même reliée par des échangeurs thermiques ou directement à l'installation du bâtiment et qui contient au moins : des dispositifs de mesure, de commande et d'asservissement, des pompes d'alimentation (24) pour le maintien de la pression et la régulation du niveau ainsi que des pompes de circulation (25) pour le transport de la chaleur, des valves (29) et un récipient d'expansion (26) pour différents maintiens de pression, un réservoir de régulation de niveau (27) pour remplissage d'eau et de gaz et un réservoir d'échange thermique (28) pour des déplacements de chaleur dans le bâtiment, ces trois réservoirs pouvant également être réunis en un réservoir de construction compacte.

4. Installation selon la revendication 3,
caractérisée en ce
qu'au moins un réservoir contient du liquide coloré qui est pompé dans des éléments calorifuges transparents pour ombrer et/ou pour la récupération de chaleur.

5. Installation selon l'une des revendications 3 ou 4,
caractérisée en ce
qu'un dispositif pour mesurer, commander et asservir une multitude de niveaux de liquide et un certain nombre d'étages de pression au-dessus de la pression statique du système conditionnée par la hauteur est prévu par étage du bâtiment ou par section de hauteur de bâtiment en relation avec une unité centrale de calcul pour le bâtiment qui calcule toutes les offres et tous les besoins de lumière, air et chaleur et qui détermine en particulier les voies économes en énergie pour l'ensemble du système des flux de chaleur à travers l'enveloppe de bâtiment et qui ajuste sur cela les états de fonctionnement optimaux dans l'enveloppe de bâtiment (10).

6. Composant d'une enveloppe de bâtiment (10) avec différentes propriétés pour modifier la fonction de l'enveloppe de bâtiment pour ce qui est de la transition et de la transmission de lumière, d'air et/ou de chaleur, en particulier pour exécuter le procédé selon les revendications 1 et 2 et pour l'utilisation dans une installation selon les revendications 3 à 5, qui absorbe les rayons du soleil et la chaleur ambiante ou qui transmet de la chaleur à l'air extérieur et qui fait transporter et stocker de la chaleur par un milieu caloporteur passivement par gravité ou activement par connection avec la circulation d'une installation d'un bâtiment et qui contribue ainsi au chauffage et au refroidissement du bâtiment, au moins un réservoir (31) étant placé comme composant (14 ; 30) pour former un espace creux dans l'enveloppe du bâtiment en formant une surface individuellement ou en groupes, réservoir qui prend une partie ou la totalité de la section de l'enveloppe,
caractérisé en ce
qu'une seule ou plusieurs cloisons (33) intérieures, parallèles à la surface extérieure du bâtiment, forment des compartiments stratifiés (34a, 34b, 34c) et les compartiments (34a, 34b, 34c) sont reliés en haut et en bas l'un à l'autre (35) et au moins un compartiment (34b) est rempli avec un matériau calorifuge à pores ouverts de type lamelles, fibres, spongieux ou alvéolaire, pouvant être traversé par des milieux et pouvant être vidé et ce compartiment ou un compartiment supplémentaire situé parallèlement vers l'extérieur (34a) sert de collecteur de chaleur (36) ou de refroidisseur et dont un compartiment situé vers l'intérieur (34c) sert de caloporteur (38) entre le réservoir et l'espace intérieur directement ou adjacent comme coque intérieure de l'enveloppe de bâtiment et lequel réservoir (31) présente en bas et en haut des raccords (39, 40) pour la connection avec une installation pour des remplissages, des augmentations de pression et des circulations hydropneumatiques.

7. Composant selon la revendication 6,
caractérisé en ce
que la disposition en hauteur des alimentations et évacuations (39, 40, 18, 23), de la séparation et de la connection intérieure (33, 35, 52) dans le composant (30) est échelonnée avec exactitude pour qu'une multitude de différents étages de niveau (I à X) de la séparation entre le milieu liquide et le milieu gazeux permette différents débordements et passages qui peuvent être commandés de manière centrale par le niveau égal du niveau de liquide respectif dans une section de niveau ou d'étage de l'installation.

8. Composant selon la revendication 6 et 7,
caractérisé en ce
que des clapets de non-retour (41) sont placés derrière les raccords (39, 40) qui ferment le réservoir (31) lorsqu'il y a de la pression de circulation dans l'aller (21) de l'installation (100), d'autres clapets de non-retour s'ouvrant vers les radiateurs de chauffage (19).

9. Composant selon la revendication 7 ou 8,
caractérisé en ce
que des translateurs mécaniques (42), qui réagissent à la pression intérieure du système, sont placés sur le réservoir (31) ou sur les tuyauteries vers le réservoir (18, 21, 23, 39, 40), ces translateurs agissant sur des composants de réglage (43) comme des valves, des clapets, des stores qui déterminent le passage de la lumière, de l'air et/ou du liquide dans le composant et qui actionnent un clapet (54) à un écart (46) au-dessus de la couche d'air.

10. Composant selon l'une des revendications 7 à 9,
caractérisé en ce
que le réservoir (31) est constitué en métal, en verre, en céramique, en matériaux de construction à base de ciment, en matière plastique ou en caoutchouc ou en une combinaison de plusieurs matières (44).

11. Composant selon l'une des revendications 7 à 10,
caractérisé en ce
que le réservoir (31) est configuré comme absorbeur (32) sur la face extérieure (31a).

12. Composant selon la revendication 11,
caractérisé en ce
que la surface de l'absorbeur (32) est configurée lisse ou profilée (45).

13. Composant selon la revendication 11,
caractérisé en ce
que la surface de l'absorbeur (32) est pourvue d'insertions métalliques pour la stabilisation et/ou la conduction de chaleur.

14. Composant selon l'une des revendications 7 à 13,
caractérisé en ce
que le réservoir (31) est placé à l'intérieur avec un écart (46) derrière une couche extérieure calorifuge transparente (47).

15. Composant selon l'une des revendications 7 à 14,
caractérisé en ce que la couche d'air formée par l'écart (46) devant le réservoir (31) est ouverte en bas et peut être ouverte (48) en haut vers l'extérieur et/ou vers l'intérieur par un clapet (54).

16. Composant selon l'une des revendications 7 à 15,
caractérisé en ce
que le réservoir (31) est placé à l'extérieur devant une surface de mur accumulatrice de chaleur délimitatrice d'espace (49).

17. Composant selon l'une des revendications 7 à 16,
caractérisé en ce
que le réservoir (31) est transparent, constitue lui-même une délimitation de l'espace et une couche extérieure, contient avec ou sans cloisons (33) un ou deux compartiments (34a, 34b) dont l'un est rempli d'isolation calorifuge transparente (50) qui peut être remplie avec du liquide (51) ou qui peut être traversée par du liquide.

18. Composant selon l'une des revendications 7 à 17,
caractérisé en ce
que des clapets de soupape de type languette (52) sont intégrés dans les cloisons (33) du réservoir (31) comme clapets de non-retour ne nécessitant pas d'entretien.

19. Composant selon l'une des revendications 7 à 17,
caractérisé en ce
que dans le composant (30) les compartiments (34a, 34b, 34c) dans le réservoir (31) peuvent être fermés par des soupapes (53) qui réagissent à la variation de la pression statique des milieux dans l'installation.

20. Composant selon l'une des revendications 7 à 19,
caractérisé en ce
qu'un clapet (54) au-dessus de la couche d'air à un écart (46) entre la couche extérieure (47) et le réservoir (31) prend, en fonction d'étages de différente pression statique, au moins les trois positions, est fermé ou est ouvert vers l'espace intérieur (48a) ou vers l'extérieur (48b).

21. Composant selon la revendication 20,
caractérisé en ce
que le clapet (54) est en deux parties (54a, 54b) et, en se pliant autour de deux pivots (54c, 54d), change le couple de rotation avec le sens de rotation, si bien que différentes forces de pression P0, P1, P2 déclenchent différents mouvements du clapets contre des forces de poids ou des forces de ressort constantes (54e) pour admettre différents courants d'air (48a, 48b), ceci étant provoqué par le fait que le translateur mécanique (42) déplacé par des variations de pression saisit le clapet (54) entre deux pivots (54c, 54d) et le déplace en trois positions de fonctionnement :
- Le clapet principal (54a) étant fermé, le clapet intermédiaire (54b) ferme la connection entre l'espace intérieur et l'air extérieur, une force de poids ou de ressort (54e) maintenant fermé le clapet contre la faible pression statique P0 ± PX du réservoir (31) ou de l'installation.
- Pour la première ouverture (48a) du clapet principal (54a) jusqu'à la butée, seul le couple de rotation autour du premier pivot (54c) de la force de levier générée par la pression moyennement grande P1 ± PX par le bras de levier plus long (54f) est plus grand que le couple de rotation de la force de poids ou de ressort constante (54e) par le bras de levier plus court (54g) si bien que le clapet reste dans cette position sans augmentation de la pression plus importante.
- Pour la seconde ouverture (48b) du clapet principal (54a) dans le sens inverse en entraînant le clapet intermédiaire (54b), le couple de rotation autour du second pivot (54d) pour le bras de levier court (54i) n'est plus grand que le couple de rotation de la force de poids ou de ressort (54e⁾ par le bras de levier plus long (54h) qu'avec la force de la pression statique plus élevée P2 ± PX.
